# EUROPEAN PATENT APPLICATION

(11) **EP 4 826 855 A1**
(43) Date of publication of application: **21.10.2026**
(21) Application number: 26162976.0
(22) Date of filing: 06.03.2026
(51) Int. Cl.: H01M 10/6557

(54) **BATTERY ASSEMBLY**

(30) Priority: 16.04.2025 KR 20250049278
(71) Applicant: SAMSUNG SDI CO., LTD., Yongin-si, Gyeonggi-do 17084 (KR)
(72) Inventor: CHOI, Hanyoung, 17084 Yongin-si (KR)
(74) Representative: Marks & Clerk LLP

(57) **Abstract**

A battery assembly includes: a plurality of battery cells, each including a vent part on one side surface thereof; a plurality of cooling plates located between corresponding adjacent battery cells among the plurality of battery cells, and accommodating a coolant; a plurality of connecting members connecting the plurality of cooling plates to each other to allow the coolant to flow; and a vent plate below the plurality of cooling plates and located on a side surface where the vent part of each of the plurality of battery cells is located, the vent plate to allow the coolant discharged through the connecting members to flow.

## Description

### BACKGROUND

### FIELD

Aspects of embodiments of the present disclosure relate to a battery assembly.

### Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A battery assembly used in hybrid vehicles, such as an electric vehicle (EV) and a plug-in hybrid electric vehicle (PHEV), may include a plurality of lithium-ion batteries. Although lithium-ion batteries have high energy efficiency, a risk of fire may be higher compared to those of nickel-cadmium batteries or nickel-hydrogen batteries. When a thermal runaway occurs in the lithium-ion batteries, a fire or an explosion may occur, and the thermal runaway may propagate to adjacent battery cells. When thermal runaway propagation occurs, it may be difficult to extinguish the fire due to a high fire intensity and a risk of continuous explosions.

The above information disclosed in this Background section is for enhancement of understanding of the background of the present disclosure, and therefore, it may contain information that does not constitute related (or prior) art.

### SUMMARY

One or more embodiments of the present disclosure may be directed to a battery assembly in which a thermal runaway may be prevented or reduced. One or more embodiments of the present disclosure may be directed to a battery assembly in which a propagation of a thermal runaway to adjacent battery cells may be prevented or reduced.

These and other aspects and features of the present disclosure will be described in or will be apparent from the following description of embodiments of the present disclosure.

According to one or more embodiments of the present disclosure, a battery assembly includes: a plurality of battery cells, each including a vent part on one side surface thereof; a plurality of cooling plates located between corresponding adjacent battery cells among the plurality of battery cells, and accommodating a coolant; a plurality of connecting members connecting the plurality of cooling plates to each other to allow the coolant to flow; and a vent plate below the plurality of cooling plates and located on a side surface where the vent part of each of the plurality of battery cells is located, the vent plate being configured to allow the coolant discharged through the connecting members to flow.

In an embodiment, a material of each of the plurality of connecting members may be configured to be melted or fractured at a temperature greater than or equal to a threshold temperature.

In an embodiment, the vent plate may include: a plurality of vent holes located to correspond to the vent part of each of the plurality of battery cells; a plurality of orifices located at a position corresponding to the plurality of connecting members; and a coolant discharge passage connected to the plurality of vent holes and the plurality of orifices.

In an embodiment, a size of each of the plurality of vent holes may be larger than a size of the vent part of each of the plurality of battery cells.

In an embodiment, a shape of each of the plurality of orifices may be circular or elliptical.

In an embodiment, a diameter of each of the plurality of orifices may be 1 mm to 3 mm.

In an embodiment, the vent plate may include: a first plate part on which the plurality of vent holes and the plurality of orifices may be located; and a second plate part opposite to the first plate part with the coolant discharge passage located therebetween.

In an embodiment, each of the plurality of cooling plates may include: a receiving part accommodating the coolant; and a connecting part located on a side of the receiving part, and including a coolant flow path configured to be supplied with the coolant. The connecting members may be in communication with the coolant flow path of the connecting part.

In an embodiment, the coolant flow path may be connected to a lower portion of the connecting part of each of the plurality of cooling plates.

In an embodiment, each of the plurality of battery cells may include: a pair of long side wall parts opposite to each other, and spaced from each other; and a pair of short side wall parts opposite to each other, spaced from each other, and having a smaller area than that of the pair of long side wall parts. The long side wall parts of the plurality of battery cells may face each other, and each of the plurality of cooling plates may be interposed between the long side wall parts of corresponding ones of the plurality of battery cells.

In an embodiment, each of the cooling plates may include an insulating part located on a surface facing a corresponding battery cell among the plurality of battery cells, the insulating part configured to prevent an electrical conduction between the plurality of battery cells.

In an embodiment, the battery assembly may further include a coolant supply device configured to supply the coolant to the cooling plates.

In an embodiment, each of the plurality of battery cells may further include an electrode terminal located on a surface different from the one side surface on which the vent part is located.

According to one or more embodiments of the present disclosure, a battery assembly includes: a plurality of battery cells, each including a vent part located on one side surface thereof; a plurality of cooling plates located between corresponding adjacent battery cells among the plurality of battery cells, and accommodating a coolant; a plurality of connecting members connecting the plurality of cooling plates to each other to allow the coolant to flow; and a vent plate below the plurality of cooling plates and located on a side surface where the vent part of each of the plurality of battery cells is located. Each of the plurality of cooling plates includes: a receiving part accommodating the coolant; and a connecting part located on a side of the receiving part, and including a coolant flow path configured to be supplied with the coolant. The vent plate includes: a plurality of vent holes located to correspond to the vent part of each of the plurality of battery cells; a plurality of orifices located at a position corresponding to the connecting members; and a coolant discharge passage connected to the plurality of vent holes and the plurality of orifices.

In an embodiment, a material of each of the plurality of connecting members may be configured to be melted or fractured at a temperature greater than or equal to a threshold temperature.

In an embodiment, each of the plurality of battery cells may include: a pair of long side wall parts opposite to each other, and spaced from each other; and a pair of short side wall parts opposite to each other, spaced from each other, and having a smaller area than that of the pair of long side wall parts. The long side wall parts of the plurality of battery cells may face one another, and each of the plurality of cooling plates may be interposed between the long side wall parts of corresponding ones of the battery cells.

In an embodiment, the plurality of battery cells may be located along a first direction, and the plurality of orifices may include a plurality of orifices along the first direction in one or more rows.

In an embodiment, the plurality of orifices may be symmetrically located on opposite sides of the plurality of vent holes with respect to a second direction crossing the first direction.

In an embodiment, each of the cooling plates may include an insulating part located on a surface facing a corresponding one of the plurality of battery cells, and configured to prevent an electrical conduction between the plurality of battery cells.

In an embodiment, the battery assembly may further include a coolant supply device configured to supply the coolant to the cooling plates.

At least some of the above and other features of the invention are set out in the claims.

According to some embodiments of the present disclosure, as a cooling plate may be interposed between a plurality of battery cells, the plurality of battery cells may be effectively cooled. Accordingly, a thermal runaway of the battery cells may be prevented or reduced.

According to some embodiments of the present disclosure, the cooling plate may not only cool by contacting a battery cell, but may also suppress flames due to a thermal runaway of the battery cell using a coolant in the cooling plate. Accordingly, a propagation of the flames and heat due to a thermal runaway of a battery cell to an adjacent battery cell may be prevented or reduced. In addition, debris from the battery cell may be easily discharged to the outside of the battery assembly using the coolant.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of a battery cell according to an embodiment of the present disclosure.
FIG. 2 is a bottom view illustrating an example of a battery cell according to an embodiment of the present disclosure.
FIG. 3 is an exploded perspective view illustrating an example of a battery assembly according to an embodiment of the present disclosure.
FIG. 4 is an exploded perspective view illustrating an example of a battery cell, a plurality of cooling plates, and a plurality of connecting members according to an embodiment of the present disclosure.
FIG. 5 is an exploded perspective view illustrating an example of a plurality of cooling plates according to an embodiment of the present disclosure.
FIG. 6 is a perspective view illustrating an example of a vent plate according to an embodiment of the present disclosure.
FIG. 7 to FIG. 9 illustrate examples of orifices of a vent plate according to some embodiments of the present disclosure.
FIG. 10A and FIG. 10B illustrate a flow of a coolant when a battery cell event occurs according to an embodiment of the present disclosure.
FIG. 11 illustrates an example of a flame ejection when a battery cell event occurs according to an embodiment of the present disclosure.
FIG. 12 illustrates an example of a flame and a coolant flow when a battery cell event occurs according to an embodiment of the present disclosure.
FIG. 13 is a perspective view illustrating an example of flames and a coolant that are discharged to the outside when a battery cell event occurs according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. In other words, "and/or" includes any or all combinations of a plurality of items enumerated. When "C to D" is stated, it means C or more and D or less, unless otherwise specified.

The sizes and relative sizes of layers and regions illustrated in the drawings may be exaggerated for clarity of illustration. In other words, the sizes shown in the drawings are provided for convenience of illustration, and are not limited thereto. In addition, the same reference numerals are used to refer to the same constituent elements throughout the specification.

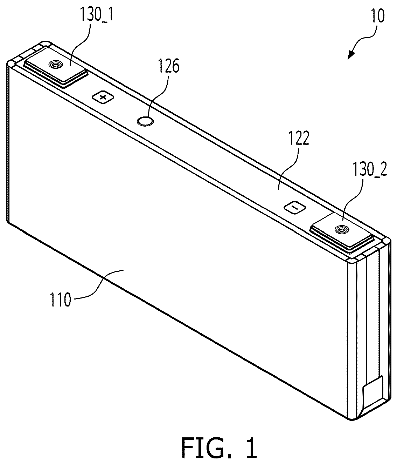

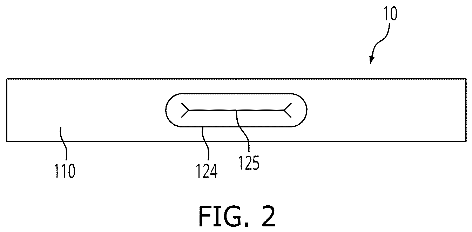

FIG. 1 is a perspective view illustrating an example of a battery cell according to an embodiment of the present disclosure. FIG. 2 is a bottom view illustrating an example of a battery cell according to an embodiment of the present disclosure.

Referring to FIG. 1, the secondary battery 10 according to one or more embodiments of the present disclosure may include at least one electrode assembly wound with a separator as an insulator between the positive electrode and the negative electrode, a case 110 in which the electrode assembly is received (or accommodated) therein, and a cap assembly coupled to an opening of the case 110.

The secondary battery 10 according to one or more embodiments illustrated in FIGS. 1 will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the positive electrode and the negative electrode may include a current collector made of a thin metal foil having a coated portion on which an active material is coated and an uncoated portion on which an active material is not coated.

The positive electrode and the negative electrode are wound after interposing the separator, which is an insulator, therebetween. However, the present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the secondary battery 10 and may be made of a conductive metal, such as aluminum, aluminum alloy, or nickel-plated steel. In addition, the case 110 may provide a space in which the electrode assembly is accommodated.

The cap assembly may include a cap plate 122 covering an opening in the case 110, and the case 110 and the cap plate 122 may be made of a conductive material. The positive and negative electrode terminals 130_1 and 130_2 electrically connected to the positive electrode and the negative electrode, respectively, may be installed to penetrate (or extend through) the cap plate 122 and protrude outwardly therethrough.

In addition, outer peripheral surfaces (e.g., circumferential surfaces) of upper pillars of the positive and negative electrode terminals 130_1 and 130_2 protruding outwardly from the cap plate 122 may be threaded and may be fixed to the cap plate 122 by utilizing nuts.

However, the present disclosure is not limited thereto, and the positive and negative electrode terminals 130_1 and 130_2 may have a rivet structure and may be riveted or welded to the cap plate 122.

In addition, the cap plate 122 may be made of a thin plate and may be coupled to the opening in the case 110, and an electrolyte injection port into which a sealing stopper 126 may be installed may be located (e.g., formed) in the cap plate 122.

In an embodiment, referring to FIG. 2, a vent part 124 having a notch 125 formed therein may be installed on a bottom surface of a battery cell 10. The vent part 124 may be formed on a surface opposite to a cap plate 122. In this case, positive and negative electrode terminals 130_1 and 130_2 of the battery cell 10 may be located on a surface different from the surface on which the vent part 124 is formed. Accordingly, when a pressure (e.g., an internal gas pressure) inside a case 110 rises due to a thermal runaway of the battery cell 10, the vent part 124 may be fractured, and gas inside the case 110 may be discharged to the outside of the battery cell 10. For example, when an internal pressure of the battery cell 10 rises, the vent part 124 located on the bottom surface of the battery cell 10 may be fractured, so that the gas inside the case 110 may be discharged to a lower part of the battery cell 10.

The battery cell 10 may be a lithium battery cell, a sodium battery cell, or the like. However, the present disclosure is not limited thereto, and the battery cell 10 may include any suitable battery that can repeatedly provide electricity by charging and discharging. In an embodiment, when the battery cell 10 is a lithium battery cell, it may be used in an electric vehicle (EV) because of its excellent life characteristics and high-rate characteristics. For example, the lithium battery cell may be used in a hybrid vehicle, such as a plug-in hybrid electric vehicle (PHEV). In addition, the lithium battery cell may be used in various suitable fields requiring or desiring various amounts of power storage in various ranges. For example, the lithium battery cell may be used in smartphones, tablet computers, wearable devices, electric bicycles, power tools, energy storage systems (ESS), and the like.

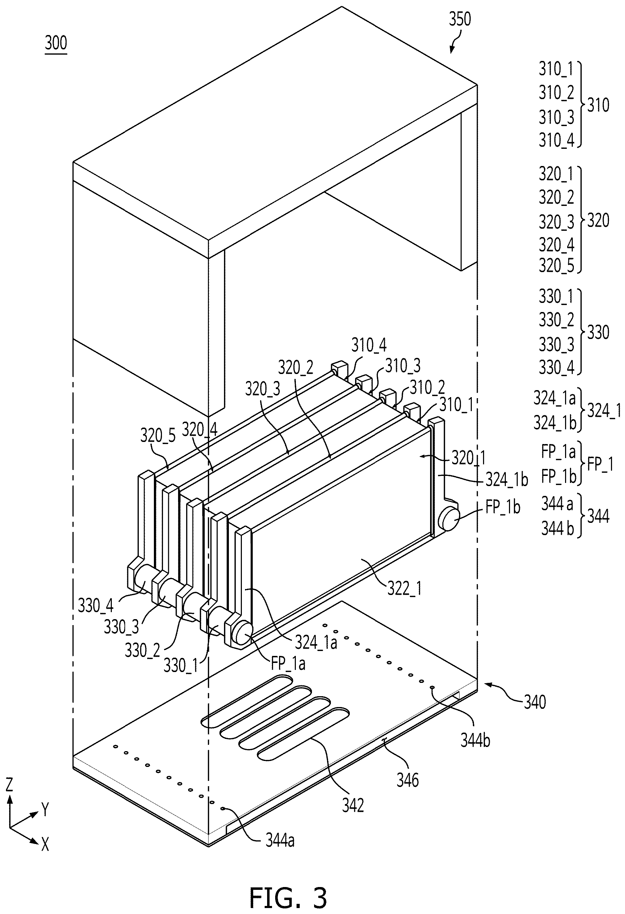

FIG. 3 is an exploded perspective view illustrating an example of a battery assembly according to an embodiment of the present disclosure.

Referring to FIG. 3, a battery assembly 300 may include a plurality of battery cells 310, a plurality of cooling plates 320, a plurality of connecting members 330, a vent plate 340, and a housing 350. Each of the plurality of cooling plates 320 may be interposed between corresponding adjacent battery cells among the plurality of battery cells 310. In addition, each of the plurality of battery cells 310 may be interposed between corresponding adjacent cooling plates among the plurality of cooling plates 320. Each of the plurality of battery cells 310 may include a vent part (e.g., 124 of FIG. 2) formed at a lower part thereof.

In an embodiment, a first battery cell 310_1 may be interposed between a first cooling plate 320_1 and a second cooling plate 320_2, a second battery cell 310_2 may be interposed between the second cooling plate 320_2 and a third cooling plate 320_3, a third battery cell 310_3 may be interposed between the third cooling plate 320_3 and a fourth cooling plate 320_4, and a fourth battery cell 310_4 may be interposed between the fourth cooling plate 320_4 and a fifth cooling plate 320_5.

In an embodiment, the first cooling plate 320_1 may include a receiving part 322_1 that accommodates a coolant, and a connecting part 324_1 that is located on a side of the receiving part 322_1. The connecting part 324_1 may include a coolant flow path FP_1 that is supplied with the coolant. Similarly, each of the second cooling plate 320_2 to the fifth cooling plate 320_5 may have the same structure as that of the first cooling plate 320_1. A material of the receiving part 322_1 and a material of the connecting part 324_1 may be a metal material, such as aluminum (Al), but are not limited thereto. The coolant may include a liquid coolant, such as a cooling water in which water, ethylene glycol, or the like is mixed with each other, but the present disclosure is not limited thereto.

In an embodiment, the connecting part 324_1 may include connecting parts 324_1a and 324_1b located on both sides (e.g., opposite sides) of the receiving part 322_1. The coolant flow path FP_1 may include coolant flow paths FP_1a and FP_1b connected to a lower part of the connecting parts 324_1a and 324_1b. For example, a first coolant flow path FP_1a may be connected to a lower part of a first connecting part 324_1a, and a second coolant flow path FP_1b may be connected to a lower part of a second connecting part 324_1b. However, connecting portions of the coolant flow paths FP_1a and FP_1b are not limited thereto, and the coolant flow paths FP_1a and FP_1b may be connected to an upper part of the connecting parts 324_1a and 324_1b.

The plurality of connecting members 330 may connect the plurality of cooling plates 320 to each other to allow the coolant to flow. The plurality of connecting members 330 may be disposed to be in communication with the coolant flow paths FP_1a and FP_1b of the connecting parts 324_1a and 324_1b. Each of the plurality of connecting members 330 may be interposed between corresponding adjacent cooling plates among the plurality of cooling plates 320.

In an embodiment, a first connecting member 330_1 may be interposed between the first cooling plate 320_1 and the second cooling plate 320_2, a second connecting member 330_2 may be interposed between the second cooling plate 320_2 and the third cooling plate 320_3, a third connecting member 330_3 may be interposed between the third cooling plate 320_3 and the fourth cooling plate 320_4, and a fourth connecting member 330_4 may be interposed between the fourth cooling plate 320_4 and the fifth cooling plate 320_5.

In an embodiment, each of the plurality of connecting members 330 may include a suitable material that may be melted or fractured at a temperature greater than or equal to a threshold temperature (e.g., a predetermined temperature). In other words, each of the plurality of connecting members 330 may have a suitable melting point to be melted in response to a thermal runaway of the plurality of battery cells 310. Accordingly, when a thermal runaway occurs in any one of the plurality of battery cells 310 adjacent to a cooling plate 320, a connecting member 330 may be melted or fractured, and the coolant accommodated in the cooling plate 320 may be discharged. The "threshold temperature" or the "predetermined temperature" may be a suitable temperature or a temperature range at which the battery cell may cause a thermal runaway. For example, the threshold or predetermined temperature may be 150°C to 200°C, but the present disclosure is not limited thereto.

The vent plate 340 is located below the plurality of cooling plates 320, and on a side where the vent part of each of the plurality of battery cells 310 is formed. The vent plate 340 may allow the coolant discharged through a connecting member 330 to flow. In an embodiment, the vent plate 340 may include a plurality of vent holes 342, a plurality of orifices 344, and a coolant discharge passage 346.

In an embodiment, the plurality of vent holes 342 may be formed corresponding to the vent part of each of the plurality of battery cells 310. For example, the plurality of vent holes 342 may correspond to a vent part of the first battery cell 310_1, a vent part of the second battery cell 310_2, a vent part of the third battery cell 310_3, and a vent part of the fourth battery cell 310_4, respectively. A size of each of the plurality of vent holes 342 may be larger than a size of the vent part of each of the plurality of battery cells 310. FIG. 3 illustrates that the plurality of vent holes 342 are formed in the vent plate 340 corresponding to the vent part of each of the plurality of battery cells 310, but the present disclosure is not limited thereto. For example, one or more vent holes may be formed on the vent plate 340 at a position corresponding to at least some of the vent parts of the plurality of battery cells 310.

In an embodiment, the plurality of orifices 344 may be formed at positions corresponding to the plurality of connecting members 330 on the vent plate 340. When the plurality of battery cells 310 are arranged along a first direction (e.g., the X-axis direction), the plurality of connecting members 330 may be arranged along the first direction (e.g., the X-axis direction). In this case, the plurality of orifices 344 may include a plurality of orifices in one or more rows arranged in the first direction (e.g., the X-axis direction) to correspond to the plurality of connecting members 330. However, the present disclosure is not limited thereto, and one or more orifices may be formed on the vent plate 340 at positions corresponding to at least some of the plurality of connecting members 330.

In an embodiment, the plurality of orifices 344 may be symmetrically disposed on both sides (e.g., opposite sides) of the plurality of vent holes 342 with respect to a second direction (e.g., the Y-axis direction) perpendicular to or substantially perpendicular to the first direction (e.g., the X-axis direction) on the vent plate 340. In more detail, a distance in which a first plurality of orifices 344a is spaced apart from the plurality of vent holes 342 in the second direction (e.g., the Y-axis direction) may be the same or substantially the same as a distance in which a second plurality of orifices 344b is spaced apart from the plurality of vent holes 342 in the second direction (e.g., the Y-axis direction). However, the present disclosure is not limited thereto, and the distance in which the first plurality of orifices 344a is spaced apart from the plurality of vent holes 342 in the second direction (e.g., the Y-axis direction) may be different from the distance in which the second plurality of orifices 344b is spaced apart from the plurality of vent holes 342 in the second direction (e.g., the Y-axis direction).

The housing 350 may accommodate the plurality of battery cells 310. The housing 350 may surround (e.g., around a periphery of) at least a part of the plurality of battery cells 310 by being coupled with the vent plate 340.

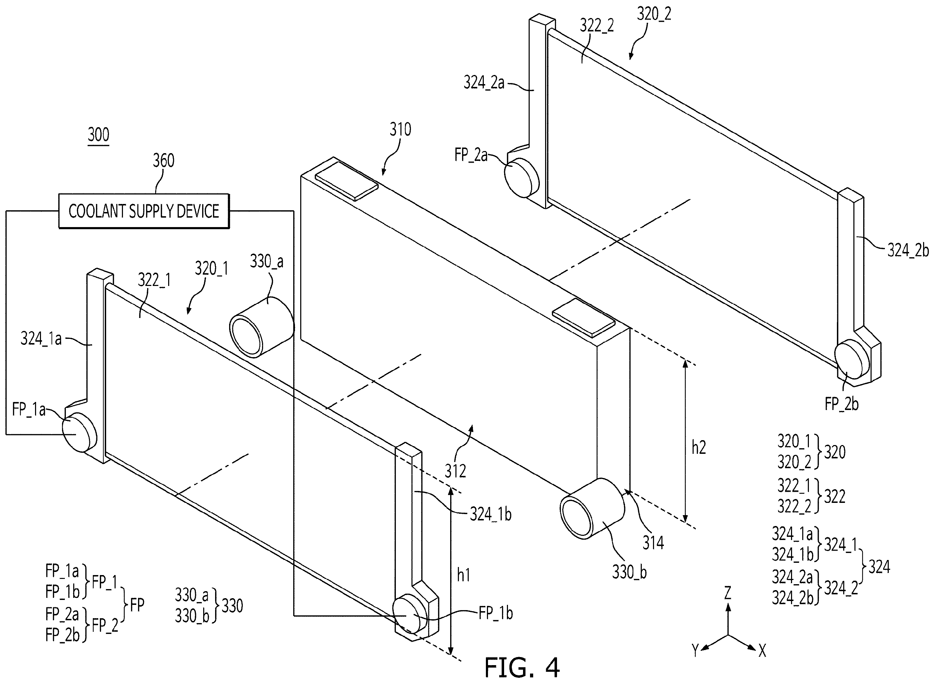

FIG. 4 is an exploded perspective view illustrating an example of a battery cell, a plurality of cooling plates, and a plurality of connecting members according to an embodiment of the present disclosure.

Referring to FIG. 4, the battery assembly 300 may include a plurality of battery cells 310, a plurality of cooling plates 320 located between the plurality of battery cells 310 and including a coolant, a plurality of connecting members 330 connecting the plurality of cooling plates 320 to each other to allow the coolant to flow, and a coolant supply device 360 that supplies the coolant to the cooling plates 320. Each of the plurality of cooling plates 320 may correspond to the cooling plate 320 described above with reference to FIG. 3.

In an embodiment, each of the plurality of battery cells 310 may include a pair of long side wall parts 312 that face or are opposite to each other and are spaced apart from each other, and a pair of short side wall parts 314 that face or are opposite to each other, are spaced apart from each other, and have a smaller area than that of the pair of long side wall parts 312. Each of the plurality of battery cells 310 may be arranged such that the long side wall parts 312 of the plurality of battery cells 310 face each other. Each of the plurality of cooling plates 320 may be interposed between the long side wall parts 312 of corresponding ones of the plurality of battery cells 310. As illustrated in FIG. 4, a second cooling plate 320_2 may be adjacent to a first cooling plate 320_1. In this case, the first cooling plate 320_1 and the second cooling plate 320_2 may be arranged to face the long side wall parts 312 of a battery cell 310 with the battery cell 310 interposed therebetween. FIG. 4 illustrates one battery cell 310 for convenience of illustration, but the present disclosure is not limited thereto, and the battery cell 310 may include the plurality of battery cells 310.

In an embodiment, a height h1 of the cooling plate 320 may be less than or equal to a height h2 of each of the plurality of battery cells 310. For example, a difference between the height h1 of the cooling plate 320 and the height h2 of each of the plurality of battery cells 310 may be 2 mm or less.

In an embodiment, a material of the plurality of connecting members 330 may include a thermoplastic material. For example, the material of the plurality of connecting members 330 may include at least one of Polyvinyl Chloride (PVC), Polyethylene (PE), Low-Density Polyethylene (LDPE), Polypropylene (PP), and/or Acrylonitrile Butadiene Styrene (ABS). As such, when a battery cell 310 event (e.g., a thermal runaway event) occurs, the plurality of connecting members 330 may be melted by heat or may be fractured by an external impact, so that the coolant may be discharged.

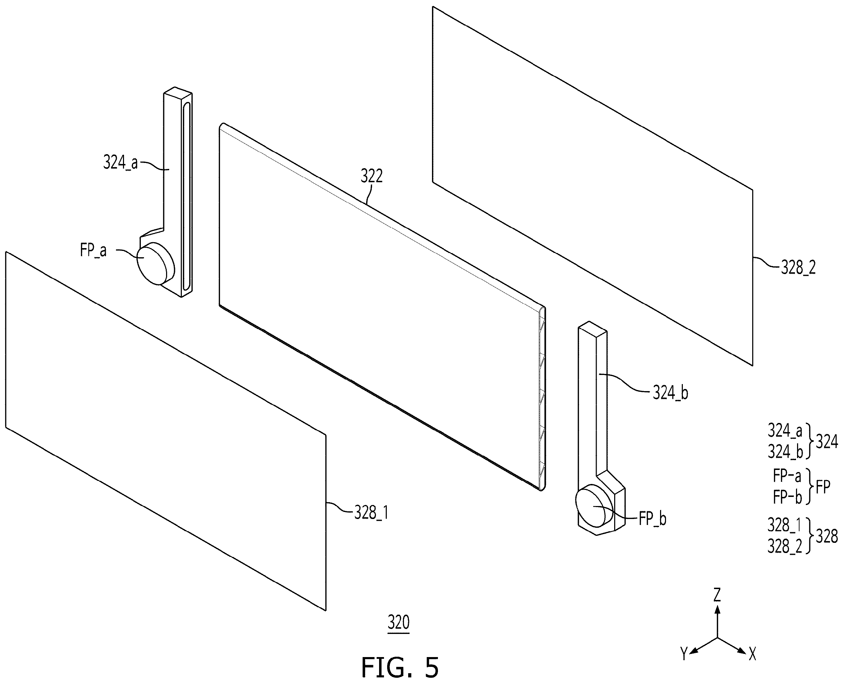

FIG. 5 is an exploded perspective view illustrating an example of a plurality of cooling plates according to an embodiment of the present disclosure.

Referring to FIG. 5, a cooling plate 320 may include a receiving part 322, a connecting part 324, and an insulating part 328.

Inside the receiving part 322, a space capable of accommodating a coolant may be formed. Both side parts (e.g., opposite side parts) of the receiving part 322 may be open so that the coolant flows into or out of the inside of the receiving part 322.

Inside the connecting part 324, a space capable of accommodating a coolant may be formed. The connecting part 324 may be disposed to be in communication with the receiving part 322. The connecting part 324 may include a coolant flow path FP for the coolant to flow in or out. For example, the connecting part 324 may include a first connecting part 324_a and a second connecting part 324_b disposed on both sides (e.g., opposite sides) of the receiving part 322, respectively. The coolant flow path FP may include a first coolant flow path FP_a disposed in the first connecting part 324_a, and a second coolant flow path FP_b disposed in the second connecting part 324_b. The first coolant flow path FP_a and the second coolant flow path FP_b may be disposed at a lower part of the first connecting part 324_a and a lower part of the second connecting part 324_b, respectively.

In an embodiment, the insulating part 328 may include insulating parts 328_1 and 328_2, each including an insulating film. In addition, the insulating parts 328_1 and 328_2 may be attached to both surfaces (e.g., opposite surfaces) of the receiving part 322. As another example, the insulating parts 328_1 and 328_2 may be formed through an insulating coating on a surface (or surfaces) of the cooling plate 320 facing a battery cell 310 (or respective battery cells 310) among a plurality of battery cells 310. As such, an electrical conduction between the plurality of battery cells may be prevented or substantially prevented.

Accordingly, as a cooling plate is interposed between a plurality of battery cells, the plurality of battery cells may be effectively cooled. Accordingly, a thermal runaway of the battery cells may be prevented or reduced.

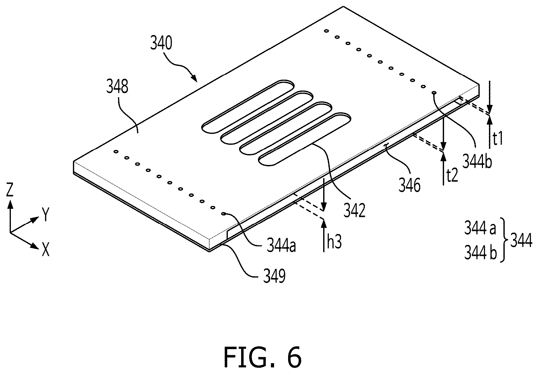

FIG. 6 is a perspective view illustrating an example of a vent plate according to an embodiment of the present disclosure.

Referring to FIG. 6, a vent plate 340 may include a plurality of vent holes 342, a plurality of orifices 344, a coolant discharge passage 346, a first plate part 348, and a second plate part 349.

On the vent plate 340, the plurality of vent holes 342 may be formed corresponding to the vent part of each of the plurality of battery cells. The plurality of vent holes 342 may be formed to penetrate the first plate part 348 in a thickness direction or a third direction (e.g., the Z-axis direction). The plurality of vent holes 342 may be arranged along a first direction (e.g., the X-axis direction). For example, the plurality of vent holes 342 may be formed in one row along the first direction (e.g., the X-axis direction), but the present disclosure is not limited thereto.

The plurality of orifices 344 may be formed at positions corresponding to a plurality of connecting members of a plurality of cooling plates disposed on the vent plate 340. The plurality of orifices 344 may be formed to penetrate the first plate part 348 in the thickness direction or the third direction (e.g., the Z-axis direction). The plurality of orifices 344 may be arranged along the first direction (e.g., the X-axis direction). The plurality of orifices 344 may include a first plurality of orifices 344a and a second plurality of orifices 344b respectively formed on both sides (e.g., opposite sides) of the plurality of vent holes 342. In FIG. 6, the first plurality of orifices 344a and the second plurality of orifices 344b are illustrated as being spaced apart from the plurality of vent holes 342 by the same or substantially the same distance as each other, but the present disclosure is not limited thereto, and they may be spaced apart by different distances from each other from the plurality of vent holes 342.

The coolant discharge passage 346 may be located between the first plate part 348 and the second plate part 349, and may have a suitable shape penetrated in the X-axis direction. The coolant discharge passage 346 may be connected to the plurality of vent holes 342 and the plurality of orifices 344. A height h3 of the coolant discharge passage 346 may be approximately 5 mm to 10 mm. The height h3 of the coolant discharge passage 346 may refer to a length of the coolant discharge passage 346 along the thickness direction or the third direction (e.g., the Z-axis direction).

The plurality of vent holes 342 and the plurality of orifices 344 may be formed in the first plate part 348. A thickness t1 of the first plate part 348 may be approximately 1.5 mm to 2 mm. The first plate part 348 may include steel. However, the thickness and the material of the first plate part 348 are not limited thereto.

The second plate part 349 may face or be opposite to the first plate part 348 with the coolant discharge passage 346 therebetween. A thickness t2 of the second plate part 349 may be approximately 1 mm to 1.5 mm. The second plate part 349 may include steel. However, the thickness and the material of the second plate part 349 are not limited thereto.

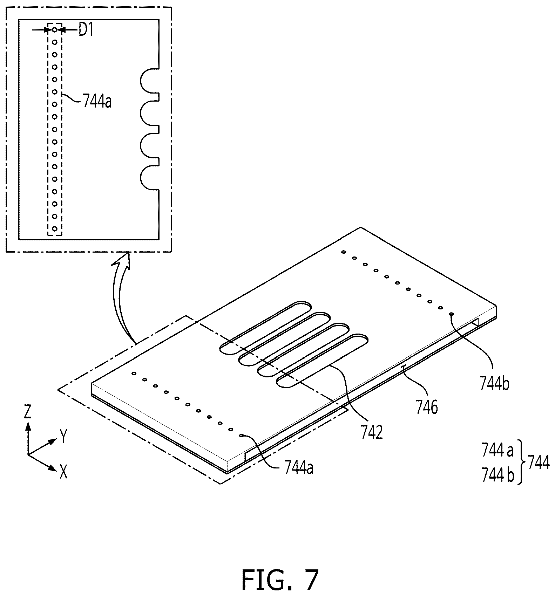

FIG. 7 to FIG. 9 illustrate examples of orifices of a vent plate according to some embodiments of the present disclosure.

Referring to FIG. 7, a plurality of orifices 744 may include a first plurality of orifices 744a formed on one side of a plurality of vent holes 742, and a second plurality of orifices 744b formed on another side of the plurality of vent holes 742.

The first plurality of orifices 744a may be disposed along one row in a first direction (e.g., the X-axis direction). A shape of each of the first plurality of orifices 744a may be circular. A diameter D1 of each of the first plurality of orifices 744a may be 1 mm to 3 mm. Accordingly, flames that may be generated in a battery cell may be prevented or substantially prevented from flowing back through the plurality of orifices, and a coolant ejected from a cooling plate may flow into the plurality of orifices.

The shape and size of the second plurality of orifices 744b may be the same or substantially the same as the shape and size of the first plurality of orifices 744a, but the present disclosure is not limited thereto, and may be formed differently from the shape and size of the first plurality of orifices 744a.

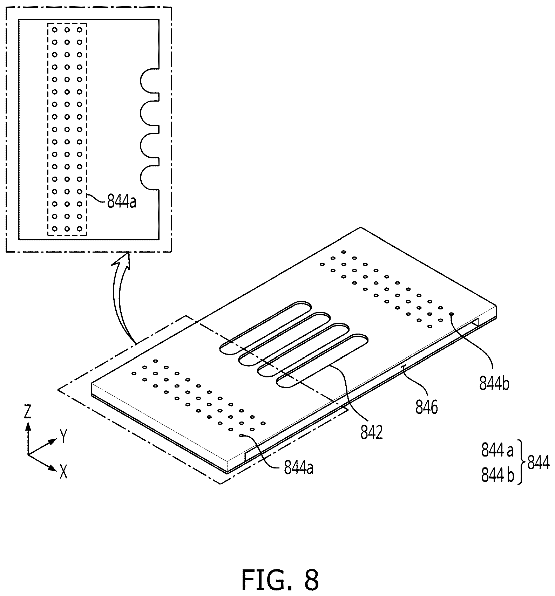

Referring to FIG. 8, a first plurality of orifices 844a may be disposed in a plurality of rows along a first direction (e.g., the X-axis direction). For example, the first plurality of orifices 844a may be disposed in three rows along the first direction (e.g., the X-axis direction). A shape and a size of a second plurality of orifices 844b may be the same or substantially the same as a shape and a size of the first plurality of orifices 844a, but the present disclosure is not limited thereto, and may be formed differently from the shape and size of the first plurality of orifices 844a.

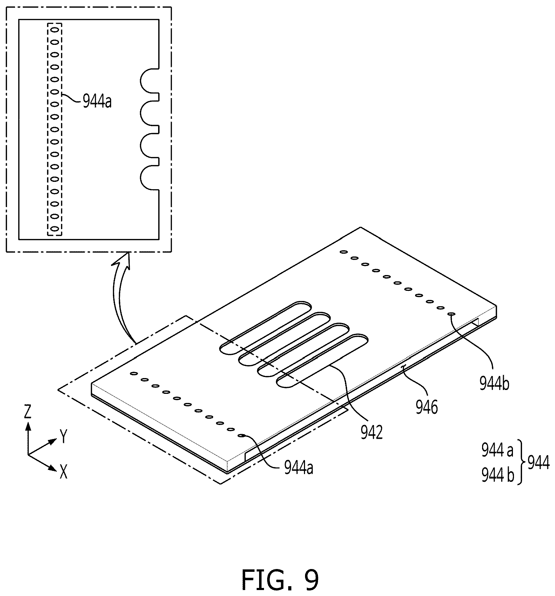

Referring to FIG. 9, a first plurality of orifices 944a may be disposed along one row in a first direction (e.g., the X-axis direction). A shape of each of the first plurality of orifices 944a may be elliptical. A shape and a size of a second plurality of orifices 944b may be the same or substantially the same as a shape and a size of the first plurality of orifices 944a, but the present disclosure is not limited thereto, and may be formed differently from the shape and size of the first plurality of orifices 944a.

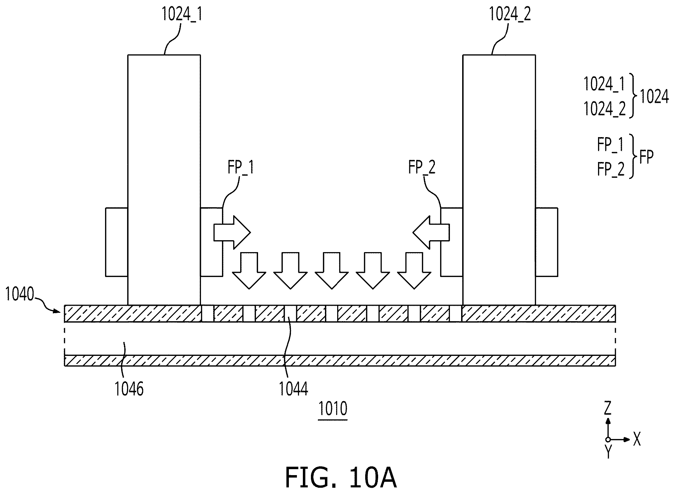

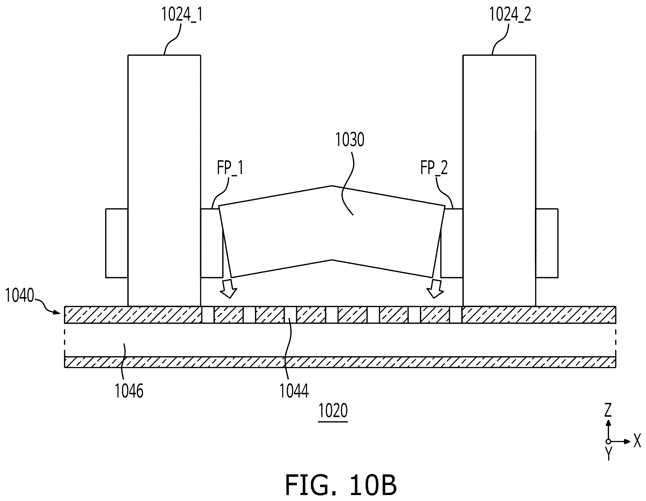

FIG. 10A and FIG. 10B illustrate a flow of a coolant when a battery cell event occurs according to an embodiment of the present disclosure.

Referring to a first example 1010 as illustrated in FIG. 10A, a state in which a connecting member connecting a first connecting part 1024_1 and a second connecting part 1024_2 to each other is melted may be shown. In the first example 1010, the connecting member is shown as being completely melted, but the present disclosure is not limited thereto, and only a part of the connecting member may be melted. Accordingly, as indicated by arrows in FIG. 10A, a coolant accommodated in the first connecting part 1024_1 and the second connecting part 1024_2 may be ejected through a first coolant flow path FP_1 and a second coolant flow path FP_2.

Subsequently, the coolant ejected through the first coolant flow path FP_1 and the second coolant flow path FP_2 may flow into a plurality of orifices 1044 of a vent plate 1040. The coolant flowing into the plurality of orifices 1044 may flow to a coolant discharge passage 1046.

Referring to a second example 1020 as illustrated in FIG. 10B, a state in which a part of a connecting member 1030 connecting a first connecting part 1024_1 and a second connecting part 1024_2 to each other is melted or bent and broken may be shown. Accordingly, as indicated by arrows in FIG. 10B, a coolant accommodated in the first connecting part 1024_1 and the second connecting part 1024_2 may be ejected through a first coolant flow path FP_1 and a second coolant flow path FP_2.

Subsequently, the coolant ejected through the first coolant flow path FP_1 and the second coolant flow path FP_2 may flow into a plurality of orifices 1044 of a vent plate 1040. The coolant flowing into the plurality of orifices 1044 may flow to a coolant discharge passage 1046.

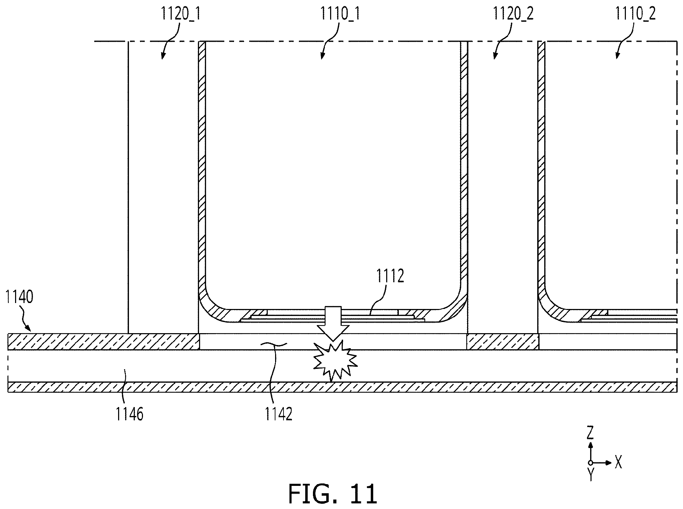

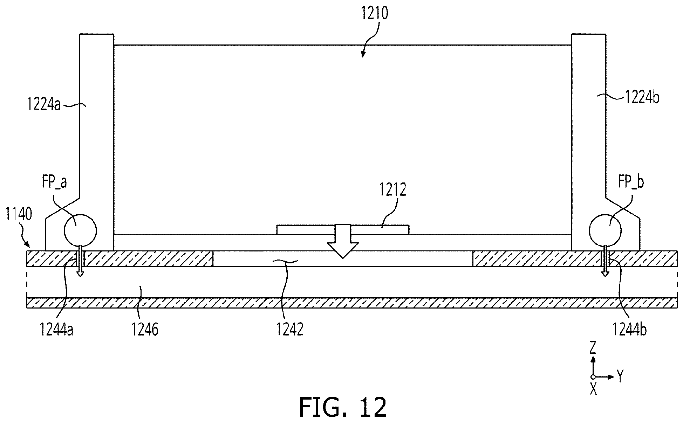

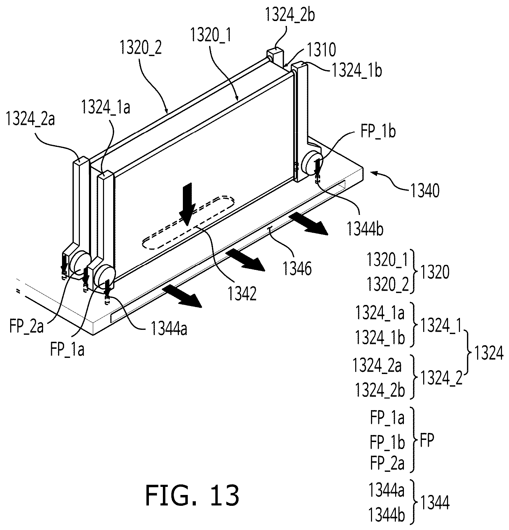

FIG. 11 illustrates an example of a flame ejection when a battery cell event occurs according to an embodiment of the present disclosure. FIG. 12 illustrates an example of a flame and a coolant flow when a battery cell event occurs according to an embodiment of the present disclosure. FIG. 13 is a perspective view illustrating an example of flames and a coolant that are discharged to the outside when a battery cell event occurs according to an embodiment of the present disclosure.

Referring to FIG. 11 to FIG. 13, a battery assembly may include a plurality of battery cells, a plurality of cooling plates located adjacent to each of the plurality of battery cells, and a vent plate located below the plurality of batteries and the plurality of cooling plates. Each of the plurality of cooling plates may include a receiving part for accommodating a coolant, and a connecting part located on a side of the receiving part and receiving the coolant from a coolant supply device. The vent plate may include a plurality of vent holes, a plurality of orifices, and a coolant discharge passage.

Referring to FIG. 11, the battery assembly may include a first battery cell 1110_1, a second battery cell 1110_2 adjacent to the first battery cell 1110_1, and a first cooling plate 1120_1 and a second cooling plate 1120_2 sandwiching the first battery cell 1110_1. The second cooling plate 1120_2 may be interposed between the first battery cell 1110_1 and the second battery cell 1110_2.

Each of the plurality of battery cells may include a vent part formed at a lower portion thereof. For example, the first battery cell 1110_1 may include a first vent part 1112 formed at a lower portion thereof.

A vent plate 1140 may include a first vent hole 1142 and a coolant discharge passage 1146. The first vent hole 1142 may be formed corresponding to the first vent part 1112 of the first battery cell 1110_1. A size of the first vent hole 1142 may be larger than a size of the first vent part 1112. The coolant discharge passage 1146 may be connected to the first vent hole 1142.

Accordingly, when an internal pressure of the first battery cell 1110_1 rises due to a thermal runaway or the like, the first vent part 1112 may be fractured, and flames that may be generated in the first battery cell 1110_1 may be ejected to a lower part of the first battery cell 1110_1. Subsequently, the flames ejected to the lower part may flow into the coolant discharge passage 1146 through a plurality of vent holes 1142 of the vent plate 1140.

FIG. 12 may show a state in which a receiving part of a cooling plate is omitted for convenience of illustration.

Referring to FIG. 12, flames ejected to a lower part of a battery cell 1210 may propagate heat to a first vent hole 1242, a first connecting part 1224a, and a second connecting part 1224b. Due to the heat, at least a part of a connecting member connected to a first coolant flow path FP_a and a second coolant flow path FP_b may be melted. FIG. 12 may show a state in which all of the connecting member is melted. Accordingly, a coolant in the connecting parts 1224a and 1224b may be ejected to a plurality of orifices 1244a and 1244b of a vent plate 1240 through the coolant flow paths FP_a and FP_b, as the connecting member is melted.

Referring to FIG. 13, flames ejected from a battery cell 1310 may be suppressed by a coolant ejected from a first cooling plate 1320_1 and a coolant ejected from a second cooling plate 1320_2. In this case, debris ejected with the flames from the battery cell 1310 (e.g., internal components of the battery cell incinerated by the flames, active material inside the battery cell, and/or the like) may be discharged to the outside of the battery assembly along with the coolant ejected from the first cooling plate 1320_1 and the coolant ejected from the second cooling plate 1320_2 along a coolant discharge passage 1346.

As such, a cooling plate may not only cool a battery cell by contacting the battery cell, but may also suppress flames due to a thermal runaway of the battery cell using a coolant in the cooling plate. Accordingly, the propagation of the flames and heat due to a thermal runaway of a battery cell to an adjacent battery cell may be prevented or reduced. In addition, debris from the battery cell may be easily discharged to the outside of the battery assembly using the coolant.

Although the present disclosure has been described above with respect to embodiments thereof, the present disclosure is not limited thereto. Various modifications and variations can be made thereto by those skilled in the art within the scope of the present disclosure and the equivalent scope of the appended claims.

## Claims

1. A battery assembly(300) comprising:
a plurality of battery cells(310), each comprising a vent part(124) on one side surface thereof;
a plurality of cooling plates(320) located between corresponding adjacent battery cells among the plurality of battery cells(310), and accommodating a coolant;
a plurality of connecting members(330) connecting the plurality of cooling plates(320) to each other to allow the coolant to flow; and
a vent plate(340) below the plurality of cooling plates(320) and located on a side surface where the vent part(124) of each of the plurality of battery cells(310) is located, the vent plate(340) being configured to allow the coolant discharged through the connecting members(330) to flow.

2. The battery assembly(300) as claimed in claim 1, wherein a material of each of the plurality of connecting members(330) is configured to be melted or fractured at a temperature greater than or equal to a threshold temperature.

3. The battery assembly(300) as claimed in claim 1 or 2, wherein the vent plate(340) comprises:
a plurality of vent holes(342) located to correspond to the vent part(124) of each of the plurality of battery cells(310);
a plurality of orifices(344) located at a position corresponding to the plurality of connecting members(330); and
a coolant discharge passage(346) connected to the plurality of vent holes(342) and the plurality of orifices(344).

4. The battery assembly(300) as claimed in claim 3, wherein a size of each of the plurality of vent holes(342) is larger than a size of the vent part(124) of each of the plurality of battery cells(310).

5. The battery assembly(300) as claimed in claim 3 or 4, wherein a shape of each of the plurality of orifices(344) is circular or elliptical.

6. The battery assembly(300) as claimed in claim 3, 4 or 5, wherein a diameter or width of each of the plurality of orifices(344) is 1 mm to 3 mm.

7. The battery assembly(300) as claimed in any one of claims 3 to 6, wherein the vent plate(340) comprises:
a first plate part on which the plurality of vent holes(342) and the plurality of orifices(344) are located; and
a second plate part opposite to the first plate part with the coolant discharge passage(346) located therebetween.

8. The battery assembly(300) as claimed in any preceding claim, wherein each of the plurality of cooling plates(320) comprises:
a receiving part(322) accommodating the coolant; and
a connecting part(324) located on a side of the receiving part(322), and comprising a coolant flow path(FP) configured to be supplied with the coolant, and
wherein the connecting members(330) are in communication with the coolant flow path(FP) of the connecting part(324).

9. The battery assembly(300) as claimed in claim 8, wherein the coolant flow path(FP) is connected to a lower portion of the connecting part(324) of each of the plurality of cooling plates(320).

10. The battery assembly(300) as claimed in any preceding claim, wherein each of the plurality of battery cells(310) comprises:
a pair of long side wall parts(312) opposite to each other, and spaced from each other; and
a pair of short side wall parts(314) opposite to each other, spaced from each other, and having a smaller area than that of the pair of long side wall parts(312),
wherein the long side wall parts(312) of the plurality of battery cells(310) face each other, and each of the plurality of cooling plates(320) is interposed between the long side wall parts(312) of corresponding ones of the plurality of battery cells(310).

11. The battery assembly(300) as claimed in any preceding claim, wherein each of the cooling plates(320) comprises an insulating part(328) located on a surface facing a corresponding battery cell among the plurality of battery cells(310), the insulating part(328) configured to prevent an electrical conduction between the plurality of battery cells(310).

12. The battery assembly(300) as claimed in any preceding claim, further comprising a coolant supply device(360) configured to supply the coolant to the cooling plates(320).

13. The battery assembly(300) as claimed in any preceding claim, wherein each of the plurality of battery cells(310) further comprises an electrode terminal(130_1, 130_2) located on a surface different from the one side surface on which the vent part(124) is located.

14. A battery assembly(300) comprising:
a plurality of battery cells(310), each comprising a vent part(124) located on one side surface thereof;
a plurality of cooling plates(320) located between corresponding adjacent battery cells among the plurality of battery cells(310), and accommodating a coolant;
a plurality of connecting members(330) connecting the plurality of cooling plates(320) to each other to allow the coolant to flow; and
a vent plate(340) below the plurality of cooling plates(320) and located on a side surface where the vent part(124) of each of the plurality of battery cells(310) is located,
wherein each of the plurality of cooling plates(320) comprises:
a receiving part(322) accommodating the coolant; and
a connecting part(324) located on a side of the receiving part(322), and comprising a coolant flow path(FP) configured to be supplied with the coolant, and
wherein the vent plate(340) comprises:
a plurality of vent holes(342) located to correspond to the vent part(124) of each of the plurality of battery cells(310);
a plurality of orifices(344) located at a position corresponding to the connecting members(330); and
a coolant discharge passage(346) connected to the plurality of vent holes(342) and the plurality of orifices(344).

15. The battery assembly(300) as claimed in claim 14, wherein a material of each of the plurality of connecting members(330) is configured to be melted or fractured at a temperature greater than or equal to a threshold temperature.
